# EUROPÄISCHE PATENTSCHRIFT

(11) **EP 4 487 024 B1**
(45) Veröffentlichungstag und Bekanntmachung des Hinweises auf die Patenterteilung: **18.02.2026**
(21) Anmeldenummer: 23708718.4
(22) Anmeldetag: 27.02.2023
(51) Int. Cl.: B25B 9/02, B25J 19/00, F16C 11/06, B25J 9/00

(54) **MONTAGEANORDNUNG, POSITIONIERVORRICHTUNG MIT EINER SOLCHEN MONTAGEANORDNUNG UND VORRICHTUNG ZUR HERSTELLUNG EINER SOLCHEN MONTAGEANORDNUNG**
MOUNTING ARRANGEMENT, POSITIONING DEVICE HAVING SUCH A MOUNTING ARRANGEMENT, AND DEVICE FOR PRODUCING SUCH A MOUNTING ARRANGEMENT
AGENCEMENT DE MONTAGE, DISPOSITIF DE POSITIONNEMENT AYANT UN TEL AGENCEMENT DE MONTAGE, ET DISPOSITIF POUR PRODUIRE UN TEL AGENCEMENT DE MONTAGE

(30) Priorität: 03.03.2022 DE 102022104991
(43) Veröffentlichungstag der Anmeldung: 08.01.2025
(73) Patentinhaber: Physik Instrumente (PI) SE & Co. KG, 76228 Karlsruhe (DE)
(72) Erfinder: EBERT, Michael, 76137 Karlsruhe (DE); SANDER, Christian, 76307 Karlsbad (DE); MAHL, Philipp, 68753 Waghäusel (DE)
(74) Vertreter: Grünecker Patent- und Rechtsanwälte PartG mbB
(86) Internationale Anmeldenummer: PCT/EP2023/054849
(87) Internationale Veröffentlichungsnummer: WO 2023/165932

(56) Entgegenhaltungen:
- WO-A1-2021/147267
- CN-A- 105 773 576
- CN-A- 113 386 106
- CN-B- 106 426 204
- SE-C2- 543 934
- US-A1- 2015 245 924

## Beschreibung

Die vorliegende Erfindung betrifft eine Montageanordnung zur gelenkigen Montage eines Aktors in einer Positioniervorrichtung, eine Positioniervorrichtung mit einer solchen Montageanordnung sowie eine Vorrichtung zur Herstellung einer solchen Montageanordnung.

Ein bekannter Anwendungsfall für die gelenkige Montage eines Aktors ist eine Positioniervorrichtung, die eine Basis und einen Objektträger umfasst, wobei ein oder mehrere Aktoren zwischen der Basis und dem Objektträger angeordnet sind und folglich die Lage und Position des Objektträgers gegenüber der Basis entsprechend einstellen können. Bei den Aktoren kann es sich insbesondere um Linearaktoren handeln, die über ein Kardangelenk mit der Basis bzw. dem Objektträger verbunden sind. Eine derartige Konfiguration findet man zum Beispiel bei Hexapoden, bei denen der Objektträger mit der Basis über sechs Aktoren verbunden ist.

Eine solche Vorrichtung ist z.B. durch das Dokument WO2021147267A1 beschrieben.

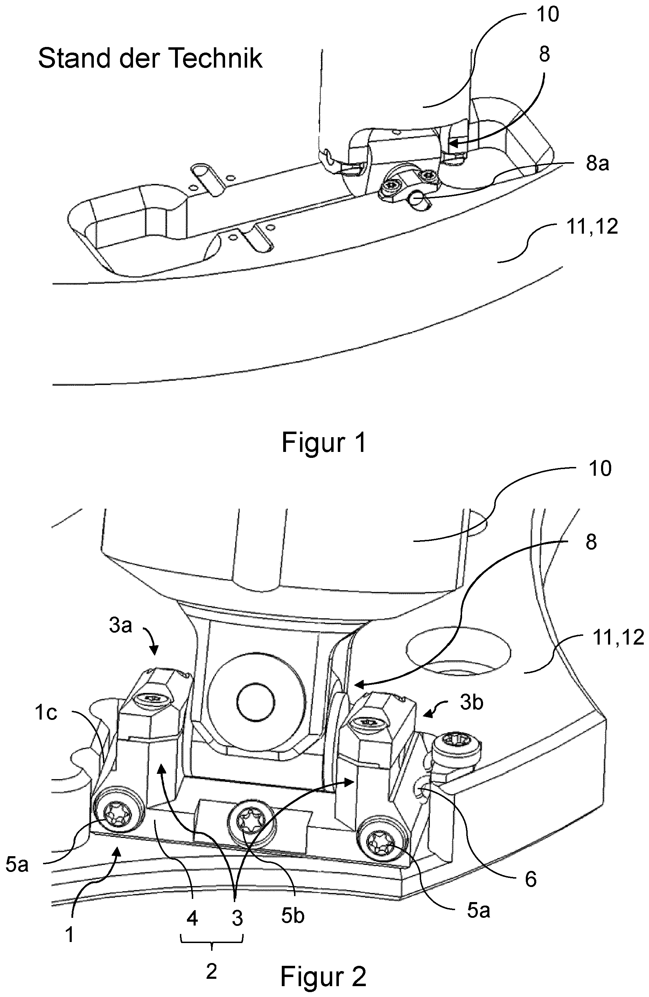

Fig. 1 zeigt eine Montageanordnung zur gelenkigen Montage eines Aktors 10 an einer Basis 11 einer Positioniervorrichtung gemäß dem Stand der Technik. In der Basis 11 und im Objektträger 12 befinden sich Ausnehmungen, die die entsprechenden Gelenkachsen 8a der mit den Aktoren 10 verbundenen Kardangelenke 8 direkt aufnehmen. Die Gelenkachsen 8a müssen bei der Montage in den entsprechenden Ausnehmungen der Basis 11 bzw. des Objektträgers 12 ausgerichtet und anschließend mit einem zusätzlichen Element fixiert werden, um eine hohe Absolutgenauigkeit der Positioniervorrichtung zu gewährleisten.

Dabei bestehen die folgenden Nachteile: die Einbringung der Ausnehmungen in Form von halbrunden Nuten in die Basis- und den Objektträger 11, 12 macht die Fertigung aufwendig. Wie oben bereits erwähnt, müssen die Gelenkachsen 8a der Kardangelenke 8 bei der Montage der Aktoren 10 in der Positioniervorrichtung in den Ausnehmungen der Basis 11 und des Objektträgers 12 ausgerichtet werden, was einen aufwendigen Prozess darstellt und im Feld, d.h. bei einem bestehenden Aufbau auf der Positioniervorrichtung bzw. einem Einbau der Positioniervorrichtung in eine übergeordnete Struktur, nicht ohne Weiteres durchführbar ist. Schrauben, die zur Fixierung der Gelenkachsen 8a an der Basis 11 bzw. dem Objektträger 12 erforderlich sind, sind üblicherweise nur von der Ober- oder der Unterseite der Basis 11 bzw. des Objektträgers 12 zugänglich. Dies erschwert die Montage der Aktoren 10 im Gesamtsystem und macht einen Tausch der Aktoren 10 im Feld teilweise unmöglich.

Aufgrund der oben beschriebenen Nachteile besteht die Aufgabe der vorliegenden Erfindung darin, eine Montageanordnung zur gelenkigen Montage eines Aktors in einer Positioniervorrichtung bereitzustellen, die einen einfacheren Fertigungs- und Montageprozess möglich macht und insbesondere den Austausch von Aktoren bei einem bestehenden Aufbau oder Einbau der Positioniervorrichtung erleichtert.

Diese Aufgabe wird gelöst durch eine Montageanordnung gemäß Anspruch 1. Erfindungsgemäß umfasst die Montageanordnung eine mit dem Aktor koppelbare Gelenkvorrichtung, ein die Gelenkvorrichtung bzw. einen Teil oder ein Element der Gelenkvorrichtung lagerndes Lager, und einen lösbar mit dem Lager verbundenen Lagersitz.

Für die Gelenkvorrichtung sind unterschiedlichste Ausführungen denkbar: beispielsweise solche mit Gelenkelementen, bei denen entsprechende Teile gegeneinander gleiten und/oder wälzen, wie etwa bei klassischen oder konventionellen Dreh- oder Kugelgelenken. Zudem sind Gelenkvorrichtungen denkbar, welche Festkörpergelenke bzw. Feder-Gelenke aufweisen. Auch Kombinationen unterschiedlicher Gelenkarten sind für die Gelenkvorrichtung vorstellbar. In einer bevorzugten Ausführungsform handelt es sich bei der Gelenkvorrichtung um ein Kardangelenk.

Mit dem Lager wird ein separates Bauteil bereitgestellt, welches die Gelenkvorrichtung bzw. ein Teil oder ein Element der Gelenkvorrichtung aufnimmt. Das Lager kann auf diese Weise mit der Gelenkvorrichtung vormontiert werden. Weiterhin ist die Gelenkvorrichtung bzw. ein Teil oder Element davon mit dem Aktor verbindbar. Für den Einbau eines mit dem Lager und der Gelenkvorrichtung vormontieren Aktors in die Positioniervorrichtung muss daher nur noch das Lager im Lagersitz positioniert und gesichert, d.h. mit dem Lagersitz verbunden werden. Analog kann der Ausbau eines Aktors einfach über das Lösen der Verbindung zwischen Lager und Lagersitz erfolgen.

Vorteilhafte Weiterbildungen sind Gegenstände der Unteransprüche.

Die Verwendung des Begriffs 'oder' in Zusammenhang mit Merkmalen der Erfindungsgegenstände soll hierin - sofern nicht explizit anders angegeben - als nicht-ausschließendes 'oder' bzw. als nicht-ausschließende Disjunktion verstanden werden.

Erfindungsgemäß ist das Lager und der Lagersitz als komplementäre männliche und weibliche Kopplungsabschnitte ausgebildet, die zwischen einem entkoppelten Zustand und einem gekoppelten Zustand überführbar sind und im gekoppelten Zustand zumindest abschnittsweise formschlüssig zusammenwirken, wobei das Lager den männlichen Kopplungsabschnitt und der Lagersitz den weiblichen Kopplungsabschnitt bildet. Durch ein formschlüssiges Zusammenwirken des Lagers und des Lagersitzes kann ein gekoppelter Zustand erreicht werden, in dem bereits einige Freiheitsgrade des Lagers gegenüber dem Lagersitz gesperrt sind, was eine Vorab-Positionierung des Lagers im Lagersitz erleichtert.

Es kann sinnvoll sein, wenn der weibliche Kopplungsabschnitt ein Gehäuse zur Aufnahme des männlichen Kopplungsabschnitts bildet, wobei das Gehäuse den männlichen Kopplungsabschnitt im gekoppelten Zustand zumindest abschnittsweise umschließt.

Es kann sich als nützlich erweisen, wenn die Montageanordnung wenigstens eine Sicherungseinrichtung aufweist, um das Lager und den Lagersitz im gekoppelten Zustand aneinander zu sichern, wobei die Sicherungseinrichtung vorzugsweise umfasst:
a. eine Federeinrichtung, insbesondere als Primärsicherung, um das Lager und den Lagersitz federnd in den gekoppelten Zustand zu drängen; und/oder
b. eine Verriegelungseinrichtung, insbesondere als Sekundärsicherung, um alle Bewegungsfreiheitsgrade des Lagers gegenüber dem Lagersitz im gekoppelten Zustand formschlüssig, vorzugsweise spielfrei, zu verriegeln, wobei die Verriegelungseinrichtung bevorzugt kraftschlüssig wirkt, besonders bevorzugt in zwei verschiedenen Richtungen.

Durch eine solche Sicherungseinrichtung kann der gekoppelte Zustand schrittweise in einen verbundenen Zustand überführt werden. Das heißt, die Freiheitsgrade des Lagers gegenüber dem Lagersitz, die im gekoppelten Zustand noch nicht gesperrt sind, werden durch die Federeinrichtung und die Verriegelungseinrichtung gesperrt, wodurch das Lager sicher und positionsgenau mit dem Lagersitz verbunden werden kann.

Es kann von Vorteil sein, wenn das Lager eine ebene Kontaktfläche aufweist, die im gekoppelten Zustand mit einer ebenen Kontaktfläche des Lagersitzes in Kontakt steht, wobei das Lager an mindestens einem über die Kontaktfläche des Lagersitzes vorstehenden Anlageabschnitt des Lagersitzes anliegt, der vorzugsweise senkrecht zur Kontaktfläche des Lagersitzes ausgerichtet ist. Dadurch werden bereits einige Freiheitsgrade des Lagers gegenüber dem Lagersitz gesperrt, wodurch eine Vorab-Positionierung des Lagers im Lagersitz erreicht wird.

Es kann sich als praktisch erweisen, wenn das Lager durch eine Schraube gegen einen ersten Anlageabschnitt des Lagersitzes gezogen wird und/oder mithilfe einer Feder gegen einen zweiten Anlageabschnitt des Lagersitzes gedrückt wird, wobei der erste Anlageabschnitt und der zweite Anlageabschnitt des Lagersitzes vorzugsweise senkrecht zueinander ausgerichtet sind. Aufgrund der so ausgeführten Positionsfixierung kann eine hohe Wiederholgenauigkeit des Montageprozesses gewährleistet werden. Zudem wird die Montage im Feld vereinfacht, da sich das Lager im Lagersitz zu einem gewissen Maß von selbst ausrichtet.

Es kann zudem von Vorteil sein, wenn die Gelenkvorrichtung als Kardangelenk mit zwei nicht-parallelen Gelenkachsen ausgeführt ist, wobei eine der Gelenkachsen durch das Lager gelagert ist und die andere der Gelenkachsen mit dem Aktor koppelbar ist. Mittels Kardangelenken kann auf vergleichsweise einfache Art eine genaue und präzise Lagerung des Aktors realisiert werden, die eine Verkippung bzw. Verschwenkung des Aktors um zwei senkrecht zueinander angeordnete Kipp- oder Drehachsen erlaubt.

Es kann nützlich sein, wenn das Lager zwei gegenüberliegende Achsaufnahmen umfasst, die jeweils einen Endabschnitt der gelagerten Gelenkachse des Kardangelenks aufnehmen.

Es kann vorteilhaft sein, wenn das Lager die gelagerte Gelenkachse des Kardangelenks kraftschlüssig, insbesondere durch Klemmen, aufnimmt und/oder stoffschlüssig, insbesondere durch Kleben oder Schweißen, mit der gelagerten Gelenkachse des Kardangelenks verbunden ist. Die Auswahl der Verbindungsart richtet sich nach dem Anwendungsfall. Mithilfe einer Klemmverbindung kann eine lösbare Verbindung bereitgestellt werden, falls eine Trennung von Kardangelenk und Lager grundsätzlich möglich sein soll. Auf der anderen Seite kann eine dauerhafte und sichere Verbindung durch eine stoffschlüssige Verbindung realisiert werden.

Es kann von Nutzen sein, wenn das Lager wenigstens eine mehrteilige Achsaufnahme aufweist, deren Teile durch mindestens eine Schraubverbindung miteinander verbunden sind, um einen Endabschnitt der gelagerten Gelenkachse des Kardangelenks festzuklemmen, wobei die Längsachse der Schraubverbindung vorzugsweise einen von 90° verschiedenen Winkel mit einer ebenen Kontaktfläche des Lagers einschließt. Durch eine solche Achsaufnahme kann das Kardangelenk lösbar mit dem Lager verbunden werden. Die genannte Ausrichtung der Längsachse der Schraubverbindung verbessert die Zugänglichkeit zur Schraubverbindung.

Ein weiterer Aspekt der vorliegenden Erfindung betrifft eine Positioniervorrichtung, umfassend eine Basis, einen Objektträger und wenigstens einen dazwischen angeordneten Aktor, wobei der mindestens eine -Aktor durch die Montageanordnung nach einer der vorangehenden Ausführungsformen mit der Basis oder dem Objektträger verbunden ist., wobei der Lagersitz integral mit der Basis oder dem Objektträger verbunden ist
In einer solchen Positioniervorrichtung können die Aktoren einfach ein-und ausgebaut bzw. ausgetauscht, werden.

Es kann vorteilhaft sein, wenn der Lagersitz integral mit der Basis oder dem Objektträger verbunden ist. Dies erleichtert insbesondere die Montage der Positioniervorrichtung.

Es kann zudem vorteilhaft sein, wenn der Lagersitz als Ausnehmung in der aktorseitigen Oberfläche der Basis oder in der aktorseitigen Oberfläche des Objektträgers ausgebildet ist. Auf diese Weise lässt sich insbesondere eine raumsparende Anordnung des Lagers in dem Lagersitz realisieren, die gleichzeitig zu Gewichtseinsparungen bei der Basis oder dem Objektträger und damit zu einer leichteren Positioniervorrichtung führt.

Es kann sich als nützlich erweisen, wenn das Lager durch mindestens eine Schraubverbindung mit dem Lagersitz verbunden ist, deren Längsachse in einer Richtung parallel zu einer aktorseitigen Oberfläche der Basis oder des Objektträgers verläuft. Dadurch wird die Zugänglichkeit zu den Schrauben verbessert. Ein Ein-und Ausbau der Aktoren kann daher auch in einem bestehenden Aufbau bzw. Einbau der Positioniervorrichtung erfolgen, insbesondere weil die Basis und der Objektträger in ihrer Position und Lage verbleiben können.

Es kann von Vorteil sein, wenn sich die Ausnehmung, als welche der Lagersitz ausgeführt ist, über einen Rand der Basis oder des Objektträgers hinweg erstreckt. Dadurch kann das Lager einfach in den Lagersitz eingeschoben werden.

Es kann sinnvoll sein, wenn die Positioniervorrichtung eine parallelkinematische Positioniervorrichtung und bevorzugt ein sechs Aktoren aufweisender Hexapod ist.

Ein weiterer Aspekt der vorliegenden Erfindung betrifft eine Vorrichtung zur Montage eines Aktors in einer Positioniervorrichtung, insbesondere zur Herstellung einer Montageanordnung nach einer der vorangehenden Ausführungsformen, umfassend einen Hauptkörper, der vorzugsweise als Handgriff ausgebildet ist, und mindestens einen mit dem Hauptkörper verbundenen Halteabschnitt, der eingerichtet ist, eine Gelenkvorrichtung, die mit einem Lager und mit dem Aktor gekoppelt ist, und das Lager verdrehsicher zu halten. Bei einem bekannten Typ eines Linearaktors wird eine Rotationsbewegung über eine Spindel in eine Translationsbewegung umgewandelt. Verfügt ein solcher Aktor nicht über einen Referenzschalter, so muss bei der Handhabung des Aktors bis zur Montage in der Positionierungsdarauf geachtet werden, dass der abtriebsseitige Teil des Aktors nicht um eine volle Spindelumdrehung verdreht wird, da sonst die eingestellte Aktorlänge um den Betrag der Spindelsteigung abweicht. Mit der oben genannten Vorrichtung kann die Handhabung eines Aktors bei der Montage vereinfacht werden. Insbesondere kann damit ein mit dem Lager vormontierter Aktor für die Montage zwischen Basis und Objektträger positioniert werden, wobei ein Verdrehen des abtriebsseitigen Teils des Aktors verhindert wird.

Es kann praktisch sein, wenn der Halteabschnitt eine Klammer und einen Stützabschnitt umfasst, wobei die Klammer eingerichtet ist, die Gelenkvorrichtung verdrehsicher zu halten, und der Stützabschnitt eingerichtet ist, das Lager verdrehsicher abzustützen.

Es kann sinnvoll sein, wenn die Klammer integral mit dem Hauptkörper verbunden oder lösbar am Hauptkörper befestigt ist. Eine integrale Verbindung des Hauptkörpers mit der Klammer kann in einem Spritzgussverfahren kostengünstig und einfach realisiert werden. Eine lösbar mit dem Hauptkörper verbundene Klammer bietet den Vorteil der Austauschbarkeit. Das heißt, es können verschiedene Klammern am Hauptkörper befestigt werden, wobei die Größe und Form der jeweiligen Klammer auf die Größe des Kardangelenks angestimmt sein kann.

### Kurze Beschreibung der Figuren

Fig. 1 zeigt eine Montageanordnung zur gelenkigen Montage eines Aktors an einer Basis einer Positioniervorrichtung gemäß dem Stand der Technik.
Fig. 2 zeigt eine Montageanordnung zur gelenkigen Montage eines Aktors an einer Basis einer Positioniervorrichtung gemäß einem Ausführungsbeispiel der vorliegenden Erfindung.
Fig. 3 zeigt ein mit einem Kardangelenk verbundenes Lager der erfindungsgemäßen Montageanordnung in einer Seitenansicht.
Fig. 4 zeigt ein mit einem Kardangelenk verbundenes Lager der erfindungsgemäßen Montageanordnung in einer perspektivischen Ansicht.
Fig. 5 zeigt eine Schnittansicht eines Ausführungsbeispiels der erfindungsgemäßen Montageanordnung.
Fig. 6 zeigt eine Detailansicht der Basis der Positioniervorrichtung, die einen Lagersitz und eine Federeinrichtung (Primärsicherung) umfasst.
Fig. 7 zeigt eine Vorrichtung zur Montage eines Aktors in einer Positioniervorrichtung.
Fig. 8 zeigt die Vorrichtung aus Fig. 7 bei der Montage eines Aktors zwischen einer Basis und einem Objektträger der Positioniervorrichtung.
Fig. 9 zeigt die Vorrichtung aus Fig. 7, bei welcher Klammern zum Halten der Kardangelenke integral mit einem Hauptkörper der Vorrichtung verbunden sind.
Fig. 10 zeigt eine alternative Ausführungsform der Vorrichtung, bei der Klammern zum Halten der Kardangelenke lösbar an einem Hauptkörper der Vorrichtung befestigt sind.

### Detaillierte Beschreibung der bevorzugten Ausführungsbeispiele

Mit Bezug auf Fig. 2 bis 6 wird eine bevorzugte Ausführungsform der vorliegenden Erfindung nachfolgend im Detail beschrieben.

Die Montageanordnung umfasst ein Lager 2, ein Kardangelenk 8 mit zwei nicht-parallelen Gelenkachsen 8a, 8b, wovon eine Gelenkachse 8a vom Lager 2 aufgenommen ist, und einen Lagersitz 1, mit dem das Lager 2 lösbar verbunden ist. Die andere Gelenkachse 8b des Kardangelenks 8 ist mit einem Aktor 10 verbunden.

Lager 2 und Lagersitz 1 sind zumindest abschnittsweise komplementär zueinander ausgebildet. Insbesondere ist der Lagersitz 1 durch eine vorzugsweise quaderförmige Ausnehmung in einer Oberfläche einer Basis 11 oder eines Objektträgers 12 gebildet. Das Lager 2 umfasst einen Anbindungsabschnitt 4, der vorzugsweise als quaderförmiger Sockel ausgebildet ist, und daher zumindest abschnittsweise formschlüssig in den Lagersitz 1 eingepasst ist. Das Lager 2, insbesondere der Anbindungsabschnitt 4, entspricht daher einem männlichen Kopplungselement. Der Lagersitz 2 entspricht einem weiblichen Kopplungselement. Wenn das Lager 2 in den Lagersitz 1 eingepasst ist, befinden sich Lager 2 und Lagersitz 1 in einem gekoppelten Zustand, in dem zumindest einige Translations- und/oder Rotationsfreiheitsgrade des Lagers 2 gegenüber dem Lagersitz 1 gesperrt sind.

Insbesondere weist der Lagersitz 1 eine ebene (Haupt-)Kontaktfläche 1a auf, die im gekoppelten Zustand bestimmungsgemäß mit einer ebenen (Haupt-)Kontaktfläche 4a des Anbindungsabschnitts 4 des Lagers 2 in Kontakt steht. Die (Haupt-)Kontaktfläche 4a des Lagers 2 bildet die Unterseite des quaderförmigen Anbindungsabschnitts 4. Weiterhin weist der Lagersitz 1 mindestens zwei Anlageabschnitte 1b, 1c auf, die in senkrechter Richtung über die (Haupt-)Kontaktfläche 1a des Lagersitzes (1) vorstehen. Zudem sind die beiden Anlageabschnitte 1b, 1c senkrecht zueinander ausgerichtet und bilden somit in Verbindung mit der (Haupt-)Kontaktfläche 1a des Lagersitzes 1 eine Art halboffenes Gehäuse, das das Lager 2, insbesondere den Anbindungsabschnitt 4, an seinen entsprechenden Abschnitten formschlüssig aufnimmt.

In der bevorzugten Ausführungsform ist der Lagersitz 1 als quaderförmige Ausnehmung in einer Oberfläche der Basis 11 bzw. des Objektträgers 12 gebildet. Selbstverständlich kann die Ausnehmung auch eine andere Form aufweisen. Um einen gekoppelten Zustand herzustellen, ist es aber in jedem Fall vorteilhaft, wenn das Lager 2 und der Lagersitz 1 zueinander komplementäre Formen aufweisen. Weiterhin muss der Lagersitz 1 durch keine Ausnehmung gebildet sein, sondern kann beispielsweise auch durch entsprechende Anschläge, die auf der Oberfläche der Basis 11 bzw. des Objektträgers 12 bereitgestellt sind, gebildet sein.

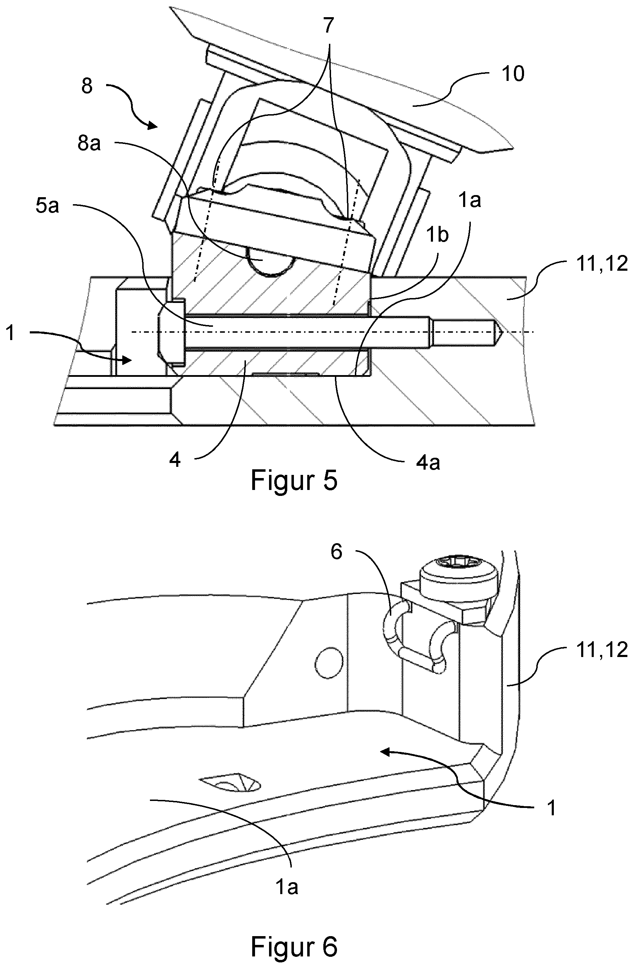

Weiterhin umfasst die Montageanordnung eine Sicherungseinrichtung 5a, 5b, 6, die das Lager 2 und den Lagersitz 1 im gekoppelten Zustand aneinander sichern. Die Sicherungseinrichtung 5a, 5b, 6 beinhaltet eine Federeinrichtung (Feder) 6, die eine Primärsicherung darstellt und das Lager 2 und den Lagersitz 1 federnd in den gekoppelten Zustand drängt. Wie den Fig. 2 und 6 entnommen werden kann, ist die Federeinrichtung (Feder) 6 an einem Abschnitt des Lagersitzes 1 angeordnet, der dem Anlageabschnitt 1c des Lagersitzes 1 gegenüberliegt. Die Feder 6 ist mit einer Schraube am Lagersitz 1 fixiert. Die Feder 6 ist so geformt, dass sie auf einen seitlichen Abschnitt des Lagers 2 drückt und das Lager 2 damit gegen den Anlageabschnitt 1c des Lagersitzes 1 drängt. Der seitliche Abschnitt des Lagers 2, auf den die Feder 6 drückt, ist vorzugsweise nicht senkreckt zur (Haupt-)Kontaktfläche 4a des Lagers 2 angeordnet, sondern ist als schräge Ebene ausgebildet. Damit erfährt das Lager 2 durch die Feder 6 nicht nur eine horizontale Kraft, die das Lager 2 gegen den Anlageabschnitt 1c des Lagersitzes 1 drängt, sondern auch eine vertikale Kraft, die das Lager 2 gegen die (Haupt-)Kontaktfläche 1a des Lagersitzes 1 drängt.

Zudem beinhaltet die Sicherungseinrichtung 5a, 5b, 6 eine Verriegelungseinrichtung 5a, 5b, die eine Sekundärsicherung darstellt und alle Bewegungsfreiheitsgrade des Lagers 2 gegenüber dem Lagersitz 1 im gekoppelten Zustand formschlüssig und spielfrei verriegelt. Insbesondere handelt es sich bei der Verriegelungseinrichtung 5a, 5b um Schrauben 5a, 5b, die das Lager 2 im Lagersitz 1 fixieren. Zwei Schrauben 5a durchdringen das Lager 2 in einer Richtung parallel zur (Haupt-)Kontaktfläche und sind in entsprechende Gewindebohrungen, die sich vom Anlageabschnitt 1b aus erstrecken, eingeschraubt (siehe Fig. 5). Die Schrauben 5a drängen das Lager 2 daher zunächst gegen den Anlageabschnitt 1b, bevor sie das Lager 2 in dieser Position schließlich kraftschlüssig im Lagersitz 1 fixieren. Weiterhin weist die Verriegelungseinrichtung 5a, 5b eine zusätzliche Schraube 5b auf, die das Lager 2 und insbesondere die (Haupt-)Kontaktfläche 4a in schräger Richtung durchdringt und in eine Gewindebohrung eingeschraubt ist, die sich in eben dieser schrägen Richtung von der (Haupt-)Kontaktfläche 1a des Lagersitzes 1 erstreckt. Die Längsachse der Schraube 5b schließt mit der (Haupt)Kontaktfläche 1a einen Winkel von 45° ein, wobei hier Winkelbereiche zwischen 30 und 50° denkbar sind. Mithilfe der Schraube 5b kann die finale Position des Lagers 2 im Lagersitz 1 fixiert werden.

Es ist denkbar, dass die Längsachsen der Schrauben 5a in einer nicht-parallelen Richtung zu der (Haupt)Kontaktfläche 1a des Lagersitzes 1 verlaufen, wobei die Winkel, den die Längsachsen der Schrauben 5a mit der (Haupt)Kontaktfläche 1a einschließen, in einem Bereich von +/- 50° liegen können.

Neben dem Anbindungsabschnitt 4 umfasst das Lager 2 einen Aufnahmeabschnitt 3 zur Aufnahme der Gelenkachse 8a des Kardangelenks 8. Der Aufnahmeabschnitt 3 ist durch zwei gegenüberliegende Achsaufnahmen 3a, 3b gebildet, die jeweils einen Endabschnitt der gelagerten Gelenkachse 8a des Kardangelenks 8 aufnehmen. Der Aufnahmeabschnitt 3 bzw. die Achsaufnahmen 3a, 3b ist/sind integral mit dem Anbindungsabschnitt 4 ausgebildet.

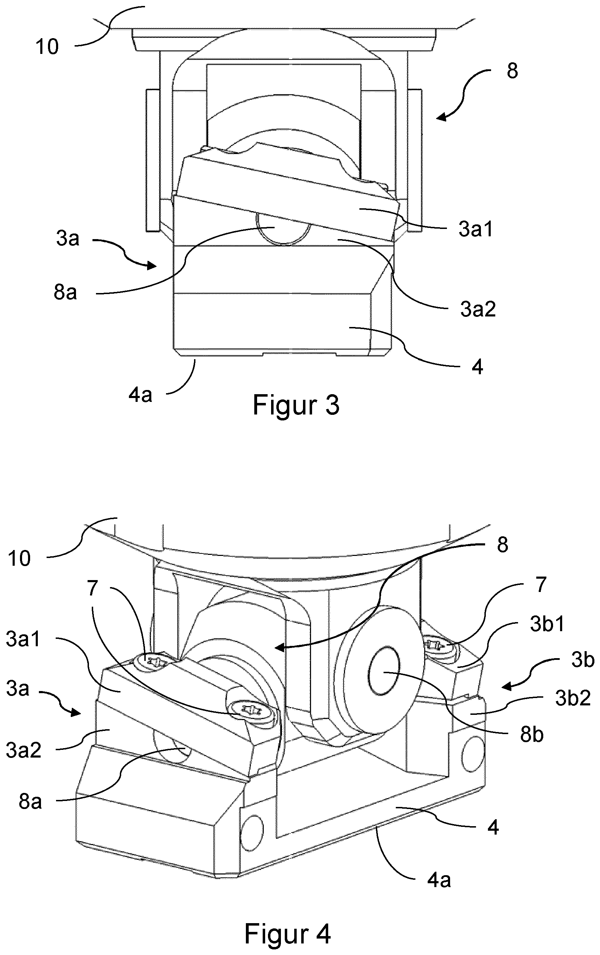

Bei den Achsaufnahmen 3a, 3b handelt es sich jeweils um mehrteilige Achsaufnahmen 3a1, 3a2, 3b1, 3b2 mit einem Oberteil 3a1, 3b1 und einem Unterteil 3a2, 3b2 (siehe Fig. 3 und 4). Das Oberteil 3a1, 3b1 und das Unterteil 3a2, 3b2 einer jeden Achsaufnahme 3a, 3b sind mit zwei Schrauben 7 so miteinander verbunden, dass sie einen Endabschnitt der gelagerten Gelenkachse 8a des Kardangelenks 8 festklemmen. Die jeweilige Längsachse dieser Schrauben 7 schließt dabei einen von 90° verschiedenen Winkel mit der (Haupt-)Kontaktfläche 4a des Lagers 2 ein (siehe Fig. 5). Eine solche Ausrichtung der Schraubenachsen ist insbesondere dadurch realisiert, dass eine Oberseite des Unterteils 3a2, 3b2 und/oder des Oberteils 3a1, 3b1 nicht parallel zur (Haupt-)Kontaktfläche 4a des Lagers 2 verläuft. Bei einem näherungsweise quaderförmigen Oberteil 3a1, 3b1 kann dies beispielsweise dadurch erreicht werden, dass eine Kontaktebene zwischen Oberteil 3a1, 3b1 und Unterteil 3a2, 3b2 nicht parallel zur (Haupt-)Kontaktfläche 4a des Lagers 2 ausgebildet ist. Die oben beschriebene Ausrichtung der Schraubenachsen verbessert die Zugänglichkeit zu den Schrauben 7, da der Einsatz entsprechender Werkzeuge nicht durch das Kardangelenk 8 oder den daran angebundenen Aktor 10 behindert wird.

Neben einer kraftschlüssigen Aufnahme der Gelenkachse 8a durch Klemmen, kann die Gelenkachse 8a auch stoffschlüssig, d.h. durch Kleben oder Schweißen, mit den Achsaufnahmen 3a, 3b verbunden werden. Auch eine Kombination aus kraftschlüssiger und stoffschlüssiger Aufnahme ist denkbar.

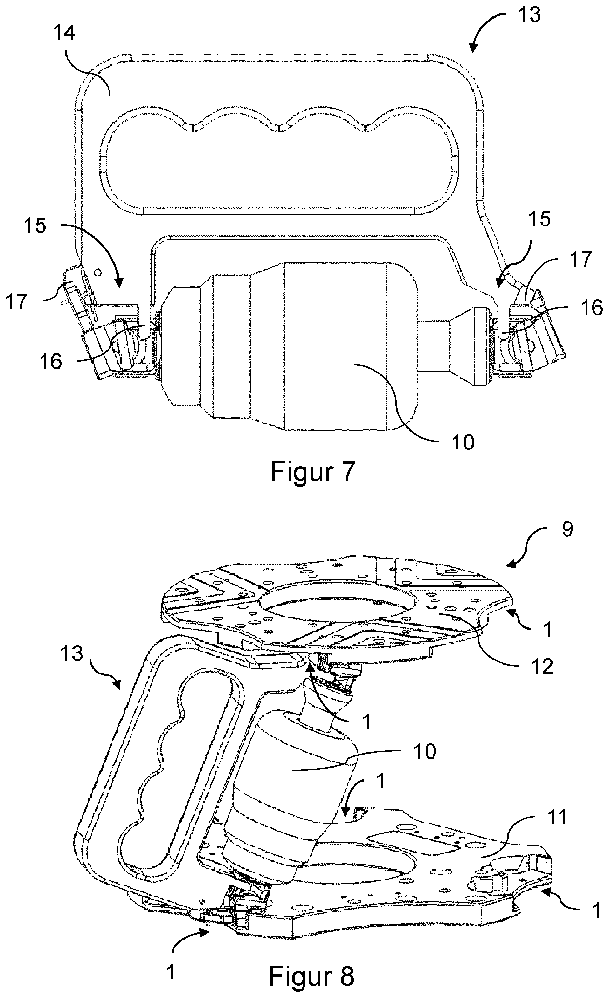

Ein weiterer Aspekt der Erfindung betrifft eine Positioniervorrichtung 9, die die erfindungsgemäße Montageanordnung umfasst. Eine solche Positioniervorrichtung 9 wird nachfolgend mit Bezug auf Fig. 8 beschrieben. Fig. 8 zeigt die Montage eines Aktors 10 zwischen der Basis 11 und dem Objektträger 12 der Positioniervorrichtung 9. In Fig. 8 ist aus Gründen der Veranschaulichung nur ein Aktor 10 abgebildet, wobei für die hier gezeigte Positioniervorrichtung 9 insgesamt sechs Aktoren vorgesehen sind, d.h. pro in der Basis 11 bzw. dem Objektträger 12 ausgebildetem Lagersitz 1 ist die Anordnung von jeweils zwei Aktoren vorgesehen. Grundsätzlich kann die Positioniervorrichtung 9 aber auch weniger als drei oder aber mehr als drei Aktoren 10 umfassen. In einem bevorzugten Fall handelt es sich bei der Positioniervorrichtung 9 um eine parallelkinematische Positioniervorrichtung und besonders bevorzugt um einen Hexapod. In diesem Fall umfasst die Positioniervorrichtung 9 sechs Aktoren 10, die zwischen der Basis 11 und dem Objektträger 12 angeordnet sind.

Erfindungsgemäß ist es vorgesehen, dass mindestens einer der Aktoren 10 durch die oben beschriebene Montageanordnung mit der Basis 11 bzw. dem Objektträger 12 verbunden ist. Der Aktor 10 ist dabei an die Gelenkachse 8b des Kardangelenks 8 gekoppelt. Der Lagersitz 1 ist integral mit der Basis 11 bzw. dem Objektträger 12 verbunden. Insbesondere ist der Lagersitz 1 als Ausnehmung in einer aktorseitigen Oberfläche der Basis 11 bzw. des Objektträgers 12 ausgebildet. Wie den Fig. 2 und 8 entnommen werden kann, erstreckt sich die Ausnehmung über einen Rand der Basis 11 bzw. des Objektträgers 12 hinweg. Das heißt, der Lagersitz 1 ist zugänglich von einer Umfangsseite der Basis 11 bzw. des Objektträgers 12. Im Falle einer näherungsweise runden Basis 11 bzw. einem runden Objektträger 12, wie in Fig. 8 gezeigt, entspricht dies einer Zugänglichkeit aus radialer Richtung. In einem Fall, in dem sich die Basis 11 und der Objektträger 12 in einem bestehenden Aufbau befinden, d.h. in einem Fall in dem der Abstand zwischen Basis 11 und Objektträger 12 bereits näherungsweise festgelegt ist, hat eine solche Anordnung der Ausnehmungen den Vorteil, dass die mit dem Aktor 10 verbundenen Lager 2 in radialer Richtung einfach in den Lagersitz 1 hineingeschoben werden können.

Weiterhin verlaufen die Längsachsen der bereits oben beschriebenen Schrauben 5a in einer Richtung parallel zu der aktorseitigen Oberfläche der Basis 11 bzw. des Objektträgers 12 bzw. parallel zu der Kontaktfläche 1a des Lagersitzes 1. Dagegen verläuft die Längsachse der Schraube 5b in einer nicht-parallelen Richtung zu der aktorseitigen Oberfläche der Basis 11 bzw. des Objektträgers 12 und gleichzeitig in einer nicht-parallelen Richtung zu der Kontaktfläche 1a des Lagersitzes 1, wobei die Richtung der Längsachse der Schraube 5b einen Winkel mit der aktorseitigen Oberfläche der Basis 11 bzw. des Objektträgers 12 bzw. der Kontaktfläche 1a des Lagersitzes von 45° einschließt. Damit ist eine umfangsseitige Zugänglichkeit bzw. eine Zugänglichkeit aus radialer Richtung zu den Schrauben 5a und 5b gewährleistet. Die Montage des Lagers 2 im Lagersitz 1 wird daher erleichtert und insbesondere durch den Aktor 10 selbst nicht behindert.

Die oben angegebene Ausrichtung der Längsachsen der Schrauben 5a und 5b ist mit Bezug auf die Ausrichtung der aktorseitigen Oberfläche der Basis 11 bzw. des Objektträgers 12 beschrieben. Alternativ bietet es sich an, die Ausrichtung der Längsachsen der Schrauben 5a und 5b mit Bezug auf eine Hauptachse der Positioniervorrichtung anzugeben. Die Hauptachse der Positioniervorrichtung ist eine zentrale Achse, die die Basis 11 und den Objektträger 12 schneidet. Im Initialzustand, d. h. im nichtausgelenkten Zustand der Positioniervorrichtung, sind die Basis 11 und der Objektträger 12 parallel zueinander und senkrecht zur Hauptachse ausgerichtet. Im üblichen Anwendungsfall verläuft die Hauptachse vertikal und die Basis 11 liegt in einer horizontalen Ebene (siehe Fig. 8). Eine gute Zugänglichkeit zu den Schrauben 5a und 5b wird bei der vorliegenden Positioniervorrichtung im Allgemeinen dadurch erreicht, dass die Längsachsen der Schrauben 5a und 5b jeweils in einem Winkelbereich von +/- 50° zu einer Orthogonalen der Hauptachse der Positioniervorrichtung ausgerichtet sind. Im oben beschriebenen üblichen Anwendungsfall ist die Orthogonale der Hauptachse folglich horizontal und parallel zur Basis 11 ausgerichtet. Selbstverständlich gibt es Anwendungsfälle, bei denen die Positioniervorrichtung in einem geneigten Zustand verbaut ist, wobei die Hauptachse nicht vertikal ausgerichtet ist.

Ein weiterer Aspekt der vorliegenden Erfindung betrifft eine Vorrichtung 13 zur Montage eines Aktors 10 in einer Positioniervorrichtung 9. Insbesondere kann mit einer solchen Vorrichtung 13 die erfindungsgemäße Montageanordnung schnell und einfach hergestellt werden. Wie Fig. 7 entnommen werden kann, umfasst die Vorrichtung 13 einen Hauptkörper 14, der als Handgriff ausgebildet ist, und zwei mit dem Hauptkörper 14 verbundene Halteabschnitte 15. Die Halteabschnitte 15 sind dazu eingerichtet, das Kardangelenk 8, das über seine erste Gelenkachse 8a mit einem Lager 2 und über seine zweite Gelenkachse 8b mit dem Aktor 10 gekoppelt ist, und das Lager 2 verdrehsicher zu halten. Wie in Fig. 8 gezeigt, kann durch die verdrehsichere Fixierung des Lagers 2 das mit dem Aktor 10 vormontierte Lager 2 so vorausgerichtet werden, dass es einfach in den Lagersitz 1 eingepasst werden kann. Diese Fixierung ist besonders vorteilhaft, wenn ein Aktor 10 zwischen eine Basis 11 und einen Objektträger 12 montiert werden soll und dabei an seinen beiden Enden ein vormontiertes Lager 2 aufweist. Das heißt, wenn der Aktor 10 mithilfe der Vorrichtung 13 zwischen der Basis 11 und dem Objektträger 12 positioniert wird, können die Lager 2 durch ihre verdrehsichere Vorausrichtung einfach in den entsprechenden Lagersitzen 1 ausgerichtet werden.

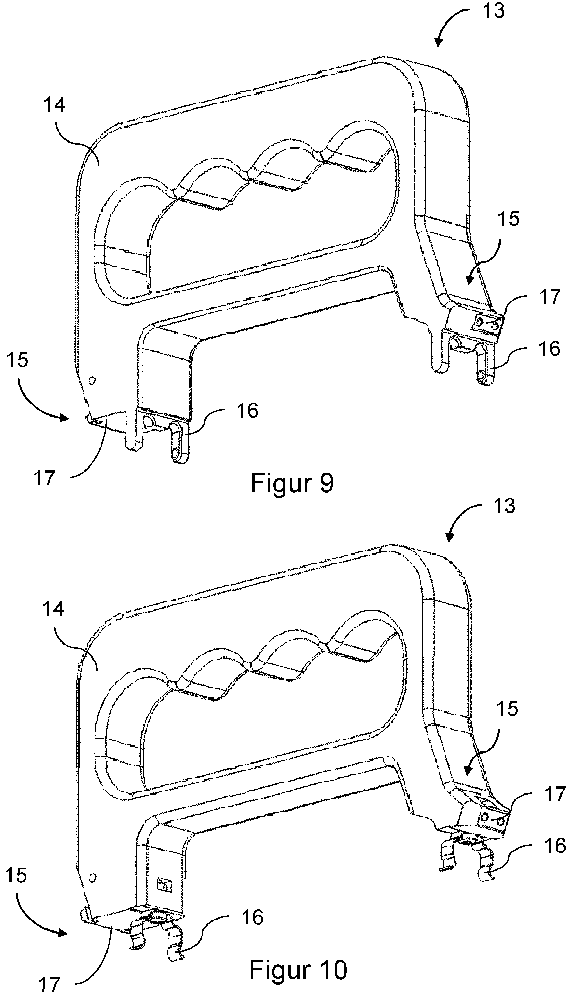

Fig. 9 und 10 zeigen, dass jeder Halteabschnitt 15 der Vorrichtung 13 eine Klammer 16 und einen Stützabschnitt 17 umfasst. Die Klammer 16 ist dabei bereitgestellt, um das Kardangelenk 8 verdrehsicher zu halten, während der Stützabschnitt 17 bereitgestellt ist, um das Lager 2 verdrehsicher abzustützen. In der in Fig. 9 dargestellten Ausführungsform ist die Klammer 16 integral mit dem Hauptkörper 14 verbunden. Die Ausführungsform, die Fig. 10 zeigt, sieht eine lösbar am Hauptkörper 14 befestigte Klammer 16 vor.

### Bezugszeichenliste

- 1: Lagersitz
- 1a: Kontaktfläche des Lagersitzes
- 1b, 1c: Anlageabschnitt des Lagersitzes
- 2: Lager
- 3: Aufnahmeabschnitt des Lagers
- 3a, 3b: Achsaufnahme
- 3a1, 3b1: Oberteil der Achsaufnahme
- 3a2, 3b2: Unterteil der Achsaufnahme
- 4: Anbindungsabschnitt des Lagers
- 4a: Kontaktfläche des Anbindungsabschnitts (Kontaktfläche des Lagers)
- 5a, 5b: Schraubverbindung (Schraube), Verriegelungseinrichtung bzw. Sekundärsicherung
- 6: Feder(einrichtung) bzw. Primärsicherung
- 7: Schraubverbindung (Schraube)
- 8: Gelenkvorrichtung
- 8a: erste Gelenkachse der als Kardangelenk ausgeführten Gelenkvorrichtung
- 8b: zweite Gelenkachse der als Kardangelenk ausgeführten Gelenkvorrichtung
- 9: Positioniervorrichtung
- 10: Aktor
- 11: Basis
- 12: Objektträger
- 13: Montagevorrichtung
- 14: Hauptkörper (Handgriff) der Montagevorrichtung
- 15: Halteabschnitt der Montagevorrichtung
- 16: Klammer
- 17: Stützabschnitt

## Patentansprüche

1. Montageanordnung zur gelenkigen Montage eines Aktors (10) in einer Positioniervorrichtung (9), umfassend eine mit dem Aktor (10) koppelbare Gelenkvorrichtung (8), ein die Gelenkvorrichtung (8) lagerndes Lager (2), und einen lösbar mit dem Lager (2) verbundenen Lagersitz (1), **dadurch gekennzeichnet, dass** das Lager (2) und der Lagersitz (1) als komplementäre männliche und weibliche Kopplungsabschnitte ausgebildet sind, die zwischen einem entkoppelten Zustand und einem gekoppelten Zustand überführbar sind und im gekoppelten Zustand zumindest abschnittsweise formschlüssig zusammenwirken, wobei das Lager (2) den männlichen Kopplungsabschnitt und der Lagersitz (1) den weiblichen Kopplungsabschnitt bildet.

2. Montageanordnung nach dem vorangehenden Anspruch, **dadurch gekennzeichnet, dass** der weibliche Kopplungsabschnitt ein Gehäuse zur Aufnahme des männlichen Kopplungsabschnitts bildet, wobei das Gehäuse den männlichen Kopplungsabschnitt im gekoppelten Zustand zumindest abschnittsweise umschließt.

3. Montageanordnung nach einem der vorangehenden Ansprüche, **dadurch gekennzeichnet, dass** die Montageanordnung wenigstens eine Sicherungseinrichtung (5a, 5b, 6) aufweist, um das Lager (2) und den Lagersitz (1) im gekoppelten Zustand aneinander zu sichern, wobei die Sicherungseinrichtung (5a, 5b, 6) vorzugsweise umfasst:
a. eine Federeinrichtung (6), insbesondere als Primärsicherung, um das Lager (2) und den Lagersitz (1) federnd in den gekoppelten Zustand zu drängen; und/oder
b. eine Verriegelungseinrichtung (5a, 5b), insbesondere als Sekundärsicherung, um alle Bewegungsfreiheitsgrade des Lagers (2) gegenüber dem Lagersitz (1) im gekoppelten Zustand formschlüssig, vorzugsweise spielfrei, zu verriegeln, wobei die Verriegelungseinrichtung (5a, 5b) bevorzugt kraftschlüssig wirkt, besonders bevorzugt in zwei verschiedenen Richtungen.

4. Montageanordnung nach einem der vorangehenden Ansprüche, **dadurch gekennzeichnet, dass** das Lager (2) eine ebene Kontaktfläche (4a) aufweist, die im gekoppelten Zustand mit einer ebenen Kontaktfläche (1a) des Lagersitzes (1) in Kontakt steht, wobei das Lager (2) an mindestens einem über die Kontaktfläche (1a) des Lagersitzes (1) vorstehenden Anlageabschnitt (1b, 1c) des Lagersitzes (1) anliegt, der vorzugsweise senkrecht zur Kontaktfläche (1a) des Lagersitzes (1) ausgerichtet ist.

5. Montageanordnung nach einem der vorangehenden Ansprüche, **dadurch gekennzeichnet, dass** das Lager (2) durch eine Schraube (5a) gegen einen ersten Anlageabschnitt (1b) des Lagersitzes (1) gezogen wird und/oder mithilfe einer Feder (6) gegen einen zweiten Anlageabschnitt (1b) des Lagersitzes (1) gedrückt wird, wobei der erste Anlageabschnitt (1b) und der zweite Anlageabschnitt (1c) des Lagersitzes (1) vorzugsweise senkrecht zueinander ausgerichtet sind.

6. Montageanordnung nach einem der vorangehenden Ansprüche, **dadurch gekennzeichnet, dass** die Gelenkvorrichtung (8) als Kardangelenk mit zwei nicht-parallelen Gelenkachsen (8a, 8b) ausgeführt ist, wobei eine der Gelenkachsen (8a) durch das Lager (2) gelagert ist und die andere der Gelenkachsen (8b) mit dem Aktor (10) koppelbar ist.

7. Montageanordnung nach dem vorangehenden Anspruch, **dadurch gekennzeichnet, dass** das Lager (2) zwei gegenüberliegende Achsaufnahmen (3a, 3b) umfasst, die jeweils einen Endabschnitt der gelagerten Gelenkachse (8a) des Kardangelenks (8) aufnehmen.

8. Montageanordnung nach einem der vorangehenden Ansprüche 6 oder 7, **dadurch gekennzeichnet, dass** das Lager (2) die gelagerte Gelenkachse (8a) des Kardangelenks (8) kraftschlüssig, insbesondere durch Klemmen, aufnimmt und/oder stoffschlüssig, insbesondere durch Kleben oder Schweißen, mit der gelagerten Gelenkachse (8a) des Kardangelenks (8) verbunden ist.

9. Montageanordnung nach einem der vorangehenden Ansprüche 6 bis 8, **dadurch gekennzeichnet, dass** das Lager (2) wenigstens eine mehrteilige Achsaufnahme (3a1, 3a2, 3b1, 3b2) aufweist, deren Teile durch mindestens eine Schraubverbindung (7) miteinander verbunden sind, um einen Endabschnitt der gelagerten Gelenkachse (8a) des Kardangelenks (8) festzuklemmen, wobei die Längsachse der Schraubverbindung (7) vorzugsweise einen von 90° verschiedenen Winkel mit einer ebenen Kontaktfläche (4a) des Lagers (2) einschließt.

10. Positioniervorrichtung (9), umfassend eine Basis (11), einen Objektträger (12) und wenigstens einen zwischen der Basis (11) und dem Objektträger (12) angeordneten Aktor (10), **dadurch gekennzeichnet, dass** der mindestens eine Aktor (10) durch die Montageanordnung nach einem der vorangehenden Ansprüche mit der Basis (11) oder dem Objektträger (12) verbunden ist.

11. Positioniervorrichtung (9) nach dem vorangehenden Anspruch, **dadurch gekennzeichnet, dass** der Lagersitz (1) integral mit der Basis (11) oder dem Objektträger (12) ausgebildet ist.

12. Positioniervorrichtung (9) nach dem vorangehenden Anspruch, **dadurch gekennzeichnet, dass** der Lagersitz (1) als Ausnehmung in der aktorseitigen Oberfläche der Basis (11) oder in der aktorseitigen Oberfläche des Objektträgers (12) ausgebildet ist.

13. Positioniervorrichtung (9) nach einem der Ansprüche 10 bis 12, **dadurch gekennzeichnet, dass** das Lager (2) durch mindestens eine Schraubverbindung (5a, 5b) mit dem Lagersitz (1) verbunden ist, deren Längsachse in einem Winkelbereich von +/- 50° zu einer Orthogonalen der Hauptachse der Positioniervorrichtung ausgerichtet ist, vorzugsweise in Richtung der Orthogonalen der Hauptachse, insbesondere in einer Richtung parallel zu einer aktorseitigen Oberfläche der Basis (11) bzw. des Objektträgers (12) verläuft.

14. Positioniervorrichtung (9) nach Anspruch 12, **dadurch gekennzeichnet, dass** sich die Ausnehmung, als welche der Lagersitz (1) ausgeführt ist, über einen Rand der Basis (11) bzw. des Objektträgers (12) hinweg erstreckt.

15. Positioniervorrichtung (9) nach einem der Ansprüche 10 bis 14, **dadurch gekennzeichnet, dass** die Positioniervorrichtung (9) eine parallelkinematische Positioniervorrichtung und bevorzugt ein sechs Aktoren (10) aufweisender Hexapod ist.

16. Vorrichtung (13) zur Montage eines Aktors (10) in einer Positioniervorrichtung (9), zur Herstellung einer Montageanordnung nach einem der Ansprüche 1 bis 9, umfassend einen Hauptkörper (14), der vorzugsweise als Handgriff ausgebildet ist, und mindestens einen mit dem Hauptkörper (14) verbundenen Halteabschnitt (15), der eingerichtet ist, eine Gelenkvorrichtung (8), die mit einem Lager (2) und mit dem Aktor (10) gekoppelt ist, und das Lager (2) verdrehsicher zu halten.

17. Vorrichtung (13) nach dem vorangehenden Anspruch, **dadurch gekennzeichnet, dass** der Halteabschnitt (15) eine Klammer (16) und einen Stützabschnitt (17) umfasst, wobei die Klammer (16) eingerichtet ist, die Gelenkvorrichtung (8) verdrehsicher zu halten, und der Stützabschnitt (17) eingerichtet ist, das Lager (2) verdrehsicher abzustützen.

18. Vorrichtung (13) nach dem vorangehenden Anspruch, **dadurch gekennzeichnet, dass** die Klammer (16) integral mit dem Hauptkörper (14) verbunden oder lösbar am Hauptkörper (14) befestigt ist.

## Claims

1. Mounting assembly for the articulated mounting of an actuator (10) in a positioning device (9), comprising a joint device (8) that can be coupled to said actuator (10), a bearing (2) that supports said joint device (8), and a bearing seat (1) that is connected to said bearing (2) in a detachable manner, **characterized in that** said bearing (2) and said bearing seat (1) are configured as complementary male and female coupling sections that can be moved between an uncoupled state and a coupled state and, in the coupled state, interact in a positive-fit manner at least in sections, wherein said bearing (2) forms said male coupling section and said bearing seat (1) forms said female coupling section.

2. Mounting assembly according to the preceding claim, **characterized in that** said female coupling section forms a housing for receiving said male coupling section, wherein said housing encloses said male coupling section at least in sections in the coupled state.

3. Mounting assembly according to one of the preceding claims, **characterized in that** said mounting assembly comprises at least one securing device (5a, 5b, 6) for securing said bearing (2) and said bearing seat (1) to one another in the coupled state, wherein said securing device (5a, 5b, 6) preferably comprises:
a. a spring device (6), in particular as a primary securing device, to force said bearing (2) and said bearing seat into the coupled state in a spring-loaded manner; and/or
b. a locking device (5a, 5b), in particular as a secondary securing device, to lock all degrees of freedom of motion of said bearing (2) relative to said bearing seat (1) in a positive-fit manner in the coupled state, preferably without play, wherein said locking device (5a, 5b) preferably acts in a force-fit manner, particularly preferably in two different directions.

4. Mounting assembly according to one of the preceding claims, **characterized in that** said bearing (2) comprises a flat contact surface (4a) which, in the coupled state, is in contact with a flat contact surface (1a) of said bearing seat (1), wherein said bearing (2) abuts against at least one abutment section (1b, 1c) of said bearing seat (1) which protrudes beyond said contact surface (1a) of said bearing seat (1) and is preferably aligned perpendicular to said contact surface (1a) of said bearing seat (1).

5. Mounting assembly according to one of the preceding claims, **characterized in that** said bearing (2) is drawn against a first abutment section (1b) of said bearing seat (1) by a screw (5a) and/or is pressed against a second abutment section (1b) of said bearing seat (1) using a spring (6), wherein said first abutment section (1b) and said second abutment section (1c) of said bearing seat (1) are preferably aligned perpendicular to one another.

6. Mounting assembly according to one of the preceding claims, **characterized in that** said joint device (8) is configured as a universal joint with two non-parallel joint axes (8a, 8b), wherein one of said joint axes (8a) is supported by said bearing (2) and the other of said joint axes (8b) can be coupled to said actuator (10).

7. Mounting assembly according to the preceding claim, **characterized in that** said bearing (2) comprises two oppositely disposed axis seats (3a, 3b), each of which receives an end section of said supported joint axis (8a) of said universal joint (8).

8. Mounting assembly according to one of the preceding claims 6 or 7, **characterized in that** said bearing (2) receives said supported joint axis (8a) of said universal joint (8) in a force-fit manner, in particular by clamping, and/or is connected to said supported joint axis (8a) of said universal joint (8) in a positive substance-fit manner, in particular by adhesive bonding or welding.

9. Mounting assembly according to one of the preceding claims 6 to 8, **characterized in that** said bearing (2) comprises at least one multi-part axis seat (3a1, 3a2, 3b1, 3b2), the parts of which are connected to one another by at least one screw connection (7) for clamping an end section of said supported joint axis (8a) of said universal joint (8), wherein the longitudinal axis of said screw connection (7) preferably encloses an angle other than 90° with a flat contact surface (4a) of said bearing (2).

10. Positioning device (9) comprising a base (11), an object carrier (12) and at least one actuator (10) arranged between said base (11) and said object carrier (12), **characterized in that** said at least one actuator (10) is connected to said base (11) or said object carrier (12) by said mounting assembly according to one of the preceding claims.

11. Positioning device (9) according to the preceding claim, **characterized in that** said bearing seat (1) is formed integrally with said base (11) or said object carrier (12).

12. Positioning device (9) according to the preceding claim, **characterized in that** said bearing seat (1) is formed as a recess in the surface of said base (11) on the actuator side or in the surface of said object carrier (12) on the actuator side.

13. Positioning device (9) according to one of the claims 10 to 12, **characterized in that** said bearing (2) is connected to said bearing seat (1) by at least one screw connection (5a, 5b), the longitudinal axis of which is aligned within an angular range of +/- 50° to an orthogonal line of the main axis of said positioning device, runs preferably in the direction of the orthogonal line of said main axis, in particular in a direction parallel to a surface of said base (11) or said object carrier (12) on the actuator side.

14. Positioning device (9) according to claim 12, **characterized in that** said recess, as which said bearing seat (1) is configured, extends beyond an edge of said base (11) or said object carrier (12).

15. Positioning device (9) according to one of the claims 10 to 14, **characterized in that** said positioning device (9) is a parallel kinematic positioning device and preferably a hexapod comprising six actuators (10).

16. Device (13) for mounting an actuator (10) in a positioning device (9), in particular for producing a mounting assembly according to one of the claims 1 to 9, comprising a main body (14), which is preferably configured as a handle, and at least one holding section (15) which is connected to said main body (14) and is configured to hold a joint device (8) which is coupled to a bearing (2) and to said actuator (10), and to hold said bearing (2) in a rotationally locked manner.

17. Device (13) according to the preceding claim, **characterized in that** said holding section (15) comprises a clamp (16) and a support section (17), wherein said clamp (16) is configured to hold said joint device (8) in a rotationally locked manner, and said support section (17) is configured to support said bearing (2) in a rotationally locked manner.

18. Device (13) according to the preceding claim, **characterized in that** said clamp (16) is integrally connected to said main body (14) or is attached to said main body (14) in a detachable manner.

## Revendications

1. Agencement de montage permettant le montage articulé d'un actionneur (10) dans un dispositif de positionnement (9), comprenant un dispositif d'articulation (8) pouvant être couplé à l'actionneur (10), un palier (2) assurant la mise sur palier du dispositif d'articulation (8) et un siège de palier (1) relié de manière amovible au palier (2), **caractérisé en ce que** le palier (2) et le siège de palier (1) sont réalisés sous forme de sections de couplage mâles et femelles complémentaires qu'il est possible de faire passer d'un état découplé à un état couplé et inversement et qui, à l'état couplé, coopèrent avec verrouillage par complémentarité de forme au moins par sections, dans lequel le palier (2) forme la section de couplage mâle et le siège de palier (1) forme la section de couplage femelle.

2. Agencement de montage selon la revendication précédente, **caractérisé en ce que** la section de couplage femelle forme un boîtier permettant d'accueillir la section de couplage mâle, dans lequel le boîtier entoure au moins par sections la section de couplage mâle à l'état couplé.

3. Agencement de montage selon l'une quelconque des revendications précédentes, **caractérisé en ce que** l'agencement de montage présente au moins un dispositif de blocage (5a, 5b, 6) afin de bloquer le palier (2) et le siège de palier (1) l'un au niveau de l'autre à l'état couplé, dans lequel le dispositif de blocage (5a, 5b, 6) comprend de manière préférée :
a. un dispositif à ressort (6), en particulier faisant office de dispositif de blocage primaire, afin de presser de manière élastique le palier (2) et le siège de palier (1) à l'état couplé ; et/ou
b. un dispositif de verrouillage (5a, 5b), en particulier faisant office de dispositif de blocage secondaire, afin de verrouiller par complémentarité de forme, de manière préférée sans jeu, tous les degrés de liberté de mouvement du palier (2) par rapport au siège de palier (1) à l'état couplé, dans lequel le dispositif de verrouillage (5a, 5b) agit de manière préférée par complémentarité de force, de manière particulièrement préférée dans deux directions différentes.

4. Agencement de montage selon l'une quelconque des revendications précédentes, **caractérisé en ce que** le palier (2) présente une surface de contact plane (4a) qui, à l'état couplé, est en contact avec une surface de contact plane (1a) du siège de palier (1), dans lequel le palier (2) est en appui contre au moins une section d'appui (1b, 1c) du siège de palier (1) qui fait saillie au-dessus de la surface de contact (1a) du siège de palier (1) et qui est de manière préférée orientée perpendiculairement par rapport à la surface de contact (1a) du siège de palier (1).

5. Agencement de montage selon l'une quelconque des revendications précédentes, **caractérisé en ce que** le palier (2) est tiré contre une première section d'appui (1b) du siège de palier (1) grâce à une vis (5a) et/ou est pressé à l'aide d'un ressort (6) contre une deuxième section d'appui (1b) du siège de palier (1), dans lequel la première section d'appui (1b) et la deuxième section d'appui (1c) du siège de palier (1) sont de manière préférée orientées perpendiculairement l'une par rapport à l'autre.

6. Agencement de montage selon l'une quelconque des revendications précédentes, **caractérisé en ce que** le dispositif d'articulation (8) est réalisé sous la forme d'une articulation à cardan avec deux axes d'articulation (8a, 8b) non parallèles, dans lequel un des axes d'articulation (8a) est mis sur palier grâce au palier (2) et l'autre axe d'articulation (8b) peut être couplé à l'actionneur (10).

7. Agencement de montage selon la revendication précédente, **caractérisé en ce que** le palier (2) comprend deux logements d'axe (3a, 3b) opposés qui accueillent respectivement une section d'extrémité de l'axe d'articulation (8a) mis sur palier de l'articulation à cardan (8).

8. Agencement de montage selon l'une quelconque des revendications précédentes 6 ou 7, **caractérisé en ce que** le palier (2) accueille, avec un verrouillage par complémentarité de force, en particulier par serrage, l'axe d'articulation (8a) mis sur palier de l'articulation à cardan (8), et/ou est relié avec un verrouillage par complémentarité de matière, en particulier par collage ou soudage, à l'axe d'articulation (8a) mis sur palier de l'articulation à cardan (8).

9. Agencement de montage selon l'une quelconque des revendications précédentes 6 à 8, **caractérisé en ce que** le palier (2) présente au moins un logement d'axe (3a1, 3a2, 3b1, 3b2) en plusieurs parties, dont les parties sont reliées entre elles grâce à au moins une liaison par vissage (7), afin de caler une section d'extrémité de l'axe d'articulation (8a) mis sur palier de l'articulation à cardan (8), dans lequel l'axe longitudinal de la liaison par vissage (7) forme avec une surface de contact plane (4a) du palier (2) de manière préférée un angle différent de 90° .

10. Dispositif de positionnement (9), comprenant une base (11), un porte-objet (12) et au moins un actionneur (10) agencé entre la base (11) et le porte-objet (12), **caractérisé en ce que** le au moins un actionneur (10) est relié à la base (11) ou au porte-objet (12) grâce à l'agencement de montage selon l'une quelconque des revendications précédentes.

11. Dispositif de positionnement (9) selon la revendication précédente, **caractérisé en ce que** le siège de palier (1) est réalisé d'un seul tenant avec la base (11) ou avec le porte-objet (12).

12. Dispositif de positionnement (9) selon la revendication précédente, **caractérisé en ce que** le siège de palier (1) est réalisé sous la forme d'un évidement dans la surface située côté actionneur de la base (11) ou dans la surface située côté actionneur du porte-objet (12).

13. Dispositif de positionnement (9) selon l'une quelconque des revendications 10 à 12, **caractérisé en ce que** le palier (2) est relié au siège de palier (1) grâce à au moins une liaison par vissage (5a, 5b) dont l'axe longitudinal est orienté selon une plage angulaire de +/- 50° par rapport à une orthogonale de l'axe principal du dispositif de positionnement, de manière préférée dans la direction des orthogonales de l'axe principal, en particulier dans une direction parallèle à une surface située côté actionneur de la base (11) ou du porte-objet (12).

14. Dispositif de positionnement (9) selon la revendication 12, **caractérisé en ce que** l'évidement, sous la forme duquel le siège de palier (1) est réalisé, s'étend sur un bord de la base (11) ou du porte-objet (12).

15. Dispositif de positionnement (9) selon l'une quelconque des revendications 10 à 14, **caractérisé en ce que** le dispositif de positionnement (9) est un dispositif de positionnement à cinématique parallèle et est de manière préférée un hexapode présentant six actionneurs (10).

16. Dispositif (13) permettant le montage d'un actionneur (10) dans un dispositif de positionnement (9), en vue de la création d'un agencement de montage selon l'une quelconque des revendications 1 à 9, comprenant un corps principal (14) réalisé de manière préférée sous la forme d'une poignée et au moins une section de retenue (15) reliée au corps principal (14) et conçue pour retenir un dispositif d'articulation (8) couplé à un palier (2) et à l'actionneur (10) et pour retenir le palier (2) de manière à ce qu'il ne puisse pas tourner.

17. Dispositif (13) selon la revendication précédente, **caractérisé en ce que** la section de retenue (15) comprend une pince (16) et une section d'appui (17), dans lequel la pince (16) est conçue pour retenir le dispositif d'articulation (8) de manière à ce qu'il ne puisse pas tourner, et la section d'appui (17) est conçue pour supporter le palier (2) de manière à ce qu'il ne puisse pas tourner.

18. Dispositif (13) selon la revendication précédente, **caractérisé en ce que** la pince (16) est reliée d'un seul tenant au corps principal (14) ou est fixée de manière amovible au corps principal (14).
